# EUROPEAN PATENT SPECIFICATION

(11) **EP 4 104 507 B1**
(45) Date of publication and mention of the grant of the patent: **25.11.2026**
(21) Application number: 20918461.3
(22) Date of filing: 30.12.2020
(51) Int. Cl.: H04L 41/34, H04L 41/5019

(54) **METHOD AND NETWORK NODE FOR QOS NOTIFICATION**
VERFAHREN UND NETZKNOTEN ZUR QOS-MELDUNG
PROCÉDÉ ET NOEUD DE RÉSEAU POUR UNE NOTIFICATION QOS

(30) Priority: 14.02.2020 WO PCT/CN2020/075383
(43) Date of publication of application: 21.12.2022
(73) Proprietor: Telefonaktiebolaget LM Ericsson (publ), 164 83 Stockholm (SE)
(72) Inventor: XU, Wenliang, Shanghai 200335 (CN)
(74) Representative: Ericsson
(86) International application number: PCT/CN2020/141702
(87) International publication number: WO 2021/159884

(56) References cited:
- WO-A1-2019/228214
- ANONYMOUS: "3rd Generation Partnership Project; Technical Specification Group Services and System Aspects; Procedures for the 5G System (5GS); Stage 2 (Release 16)", vol. SA WG2, no. V16.3.0, 22 December 2019 (2019-12-22), pages 1 - 558, XP051840932, Retrieved from the Internet <URL:ftp://ftp.3gpp.org/Specs/archive/23_series/23.502/23502-g30.zip 23502-g30.docx> [retrieved on 20191222]
- "3rd Generation Partnership Project; Technical Specification Group Services and System Aspects; Policy and charging control framework for the 5G System (5GS); Stage 2 (Release 16)", vol. SA WG2, no. V16.3.0, 22 December 2019 (2019-12-22), pages 1 - 112, XP051840934, Retrieved from the Internet <URL:ftp://ftp.3gpp.org/Specs/archive/23_series/23.503/23503-g30.zip 23503-g30.docx> [retrieved on 20191222]
- "3rd Generation Partnership Project; Technical Specification Group Core Network and Terminals; 5G System; Policy Authorization Service; Stage 3 (Release 16)", vol. CT WG3, no. V16.3.0, 23 December 2019 (2019-12-23), pages 1 - 143, XP051840978, Retrieved from the Internet <URL:ftp://ftp.3gpp.org/Specs/archive/29_series/29.514/29514-g30.zip 29514-g30.doc> [retrieved on 20191223]
- HUAWEI ET AL: "Corrections to handling of Alternative QoS Profiles", vol. SA WG2, no. Split, Croatia; 20191014 - 20191018, 3 December 2019 (2019-12-03), XP051835274, Retrieved from the Internet <URL:https://ftp.3gpp.org/3guInternal/3GPP_Ultimate_CRPacks/SP-191084.zip 23503_CR0331r2_(Rel-16)_S2-1910016 was 10009 was 09267 23.503 Alternative QoS Profiles_v5.docx> [retrieved on 20191203]
- NTT DOCOMO ET AL: "TSN parameters", vol. SA WG2, no. Incheon, Korea (Republic Of); 20200113 - 20200117, 7 January 2020 (2020-01-07), XP052454919, Retrieved from the Internet <URL:https://ftp.3gpp.org/tsg_sa/WG2_Arch/TSGS2_136AH_Incheon/Docs/S2-2000075.zip S2-2000075 23503_TSN parameters.docx> [retrieved on 20200107]
- SAMSUNG: "Revoke Alternative Service Requirement request", 3GPP DRAFT; S2-1912007, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Reno, Nevada, USA; 20191118 - 20191122, 22 November 2019 (2019-11-22), Mobile Competence Centre ; 650, route des Lucioles ; F-06921 Sophia-Antipolis Cedex ; France, XP051828210
- SAMSUNG: "Revoke Alternative Service Requirement request", 3GPP DRAFT; S2-1911616, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Reno, Nevada, USA; 20191118 - 20191122, 8 November 2019 (2019-11-08), Mobile Competence Centre ; 650, route des Lucioles ; F-06921 Sophia-Antipolis Cedex ; France, XP051821696
- SAMSUNG: "Revoke Alternative Service Requirement request", 3GPP DRAFT; S2-1911986, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Reno, Nevada, USA; 20191118 - 20191122, 21 November 2019 (2019-11-21), Mobile Competence Centre ; 650, route des Lucioles ; F-06921 Sophia-Antipolis Cedex ; France, XP051827232
- ANONYMOUS: "3rd Generation Partnership Project; Technical Specification Group Services and System Aspects; Procedures for the 5G System (5GS); Stage 2 (Release 16)", 3GPP STANDARD; TECHNICAL SPECIFICATION; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.3.0, 22 December 2019 (2019-12-22), Mobile Competence Centre ; 650, route des Lucioles ; F-06921 Sophia-Antipolis Cedex ; France, pages 1 - 558, XP051840932
- "3rd Generation Partnership Project; Technical Specification Group Services and System Aspects; Policy and charging control framework for the 5G System (5GS); Stage 2 (Release 16)", 3GPP STANDARD; TECHNICAL SPECIFICATION; 3GPP TS 23.503, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.3.0, 22 December 2019 (2019-12-22), Mobile Competence Centre ; 650, route des Lucioles ; F-06921 Sophia-Antipolis Cedex ; France, pages 1 - 112, XP051840934
- "3rd Generation Partnership Project; Technical Specification Group Core Network and Terminals; 5G System; Policy Authorization Service; Stage 3 (Release 16)", 3GPP STANDARD; TECHNICAL SPECIFICATION; 3GPP TS 29.514, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. V16.3.0, 23 December 2019 (2019-12-23), Mobile Competence Centre ; 650, route des Lucioles ; F-06921 Sophia-Antipolis Cedex ; France, pages 1 - 143, XP051840978

## Description

### TECHNICAL FIELD

The present disclosure relates to wireless communication, and more particularly, to a method and a network node for Quality of Service (QoS) notification.

### BACKGROUND

This section is intended to provide a background to the various embodiments of the technology described in this disclosure. The description in this section may include concepts that could be pursued but are not necessarily ones that have been previously conceived or pursued. Therefore, unless otherwise indicated herein, what is described in this section is not prior art to the description and/or claims of this disclosure and is not admitted being prior art by the mere inclusion in this section.

The Network Exposure Function (NEF) supports external exposure of capabilities of network functions. The external exposure can be categorized as Monitoring capability, Provisioning capability, Policy/Charging capability and Analytics reporting capability. The Monitoring capability is for monitoring of specific events for terminal devices (or referred to as User Equipments or UEs) in the 5^{th} Generation (5G) system and making such monitoring events information available for external exposure via the NEF. The Provisioning capability is for allowing provision of information by external parties for use by UEs in the 5G system. The Policy/Charging capability is for handling QoS and charging policy for UEs based on requests from external parties. The Policy/Charging capability involves means that allow requesting for session and charging policy, enforcing QoS policy, and applying accounting functionality, and can be used for QoS/priority handling for sessions of UEs, and for setting applicable charging parties or charging rates. The Analytics reporting capability is for allowing external parties to fetch or subscribe/unsubscribe to analytics information generated by the 5G system.

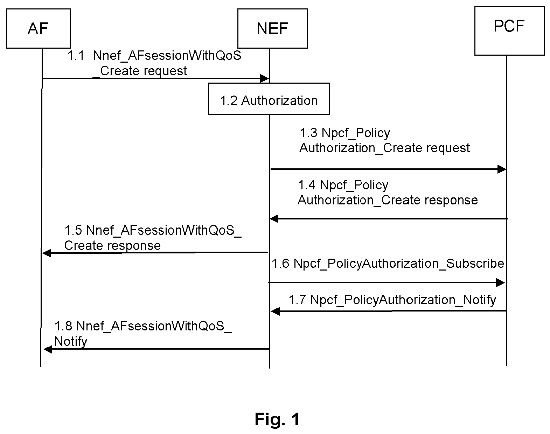

The NEF Application Programing Interface (API) can allow an Application Function (AF) to set up an AF session with a requested QoS. Fig. 1 shows a sequence flow for such procedure.

As shown, at 1.1, an AF sends a request to reserve resources for an AF session using Nnef_AFsessionWithQoS_Create request message (containing UE address, AF Identifier, Flow description(s), QoS reference (or referred to as "requested QoS" or "required QoS" hereinafter), and optionally Alternative Service Requirements (or referred to as "Alternative QoS requirements" hereinafter)) to an NEF. Optionally, a period of time or a traffic volume for the requested QoS can be included in the AF request. The NEF assigns a Transaction Reference ID to the Nnef_AFsessionWithQoS_Create request.

At 1.2, the NEF authorizes the AF request and may apply policies to control the overall amount of pre-defined QoS authorized for the AF. If the authorization is not granted, steps 1.3 and 1.4 are skipped and the NEF replies to the AF with a Result value indicating that the authorization failed.

At 1.3, the NEF interacts with a Policy Control Function (PCF) by triggering a Npcf_PolicyAuthorization_Create request and provides UE address, AF Identifier, Flow description(s) and the QoS reference including the optionally received period of time or traffic volume which is mapped to sponsored data connectivity information. The PCF derives the required QoS parameters based on the information provided by the NEF and determines whether this QoS is allowed (according to the PCF configuration for this AF), and notifies the result to the NEF. In addition, if the Alternative Service Requirements are provided, the PCF derives the Alternative QoS parameter set(s) from the one or more QoS reference parameters in the same prioritized order. The PCF notifies the NEF whether the transmission resources corresponding to the QoS request are established or not.

At 1.4, the PCF determines whether the request is allowed and notifies the NEF if the request is not authorized. If the request is not authorized, the NEF responds to the AF in step 1.5 with a Result value indicating that the authorization failed.

At 1.5, the NEF sends a Nnef_AFsessionWithQoS_Create response message (containing Transaction Reference ID and Result) to the AF. The Result indicates whether the request is granted or not.

At 1.6, the NEF shall send a Npcf_PolicyAuthorization_Subscribe message to the PCF to subscribe to notifications of Resource allocation status and may subscribe to other events.

At 1.7, when the event condition is met, the PCF sends a Npcf_PolicyAuthorization_Notify message to the NEF notifying about the event.

At 1.8, the NEF sends a Nnef_AFsessionWithQoS_Notify message with the event reported by the PCF to the AF.

For further details of the above procedure, reference can be made to the 3rd Generation Partnership Project (3GPP) Technical Specification (TS) 23.502 V16.3.0.

As specified in Section 4.15.6.6 of TS 23.502, when the AF includes alternative QoS requirements in the Nnef_AFsessionWithQoS_Create request at 1.1, the NEF will act as an internal AF to interact with the PCF, and in this case, the NEF shall also subscribe to notifications when the requested QoS can no longer (or can again) be fulfilled from the PCF, as described in Section 6.1.3.22 of TS 23.503, V16.3.0, and Section 5.6.2.15 of TS 29.514, V16.3.0, each of which is incorporated herein by reference in its entirety. For example, the requested QoS may be mapped to a bandwidth for a Service Data Flow (SDF) requiring a Guaranteed Bit Rate (GBR). When the PCF receives a policy control request trigger from a Session Management Function (SMF) for QoS notification, the PCF can report to the NEF (based on subscription) about the current situation of the QoS satisfaction and also a currently applied QoS reference.

ANONYMOUS: "3rd Generation Partnership Project; Technical Specification Group Services and System Aspects; Procedures for the 5G System (5GS); Stage 2 (Release 16)", 3GPP STANDARD; TECHNICAL SPECIFICATION; 3GPP TS 23.502, discloses a detailed process involving interactions between an Application Function (AF), Network Exposure Function (NEF), and Policy Control Function (PCF) for managing Quality of Service (QoS) requests in a 5G network. "3rd Generation Partnership Project; Technical Specification Group Services and System Aspects; Policy and charging control framework for the 5G System (5GS); Stage 2(Release 16)", 3GPP STANDARD; TECHNICAL SPECIFICATION; 3GPP TS 23.503, discloses a process for handling AF sessions with required QoS, including the use of QoS reference parameters, alternative service requirements, and the interactions between the AF, PCF, and other network components.

"3rd Generation Partnership Project; Technical Specification Group Core Network and Terminals; 5G System; Policy Authorization Service; Stage 3 (Release 16)", 3GPP STANDARD; TECHNICAL SPECIFICATION; 3GPP TS 29.514, discloses description of the PCF and its role in policy control decision-making, flow-based charging control, and interaction with service information from AF and NEF.

HUAWEI ET AL: "Corrections to handling of Alternative QoS Profiles", 3GPP DRAFT; SP-191084, 3RD GENERATION PARTNERSHIP PROJECT (3GPP), discloses how the AF requests specific QoS settings for data sessions and how the PCF handles these requests.

NTT DOCOMO ET AL: "TSN parameters", 3GPP DRAFT; S2-2000075, 3RD GENERATION PARTNERSHIP PROJECT (3GPP), discloses how the AF requests specific QoS settings, how the PCF handles these requests, and the conditions under which the SMF (Session Management Function) interacts with the PCF.

### SUMMARY

The invention is defined by the independent claims.

It is currently a problem to be solved in the 3GPP standardization regarding whether the NEF is to provide the AF with such QoS notification and, if so, which information is to be included in the notification.

It is an object of the present disclosure to provide a method and a network node, capable of allowing an NEF to provide an AF with a proper QoS notification.

According to a first aspect of the present disclosure, a method in an NEF is provided. The method includes: receiving, from an AF, a request to create a session with a requested QoS, wherein the request contains one or more alternative QoS requirements. The method further includes: subscribing to a first QoS notification from a PCF. The method further includes: receiving, from the PCF, the first QoS notification indicating that the requested QoS is not guaranteed or the requested QoS is guaranteed. The method further includes: transmitting, in response to receiving the first QoS notification, a second QoS notification indicating that the requested QoS is not guaranteed or the requested QoS is guaranteed to the AF, wherein each of the first QoS notification and the second QoS notification, when indicating that the requested QoS is not guaranteed, further indicates one of the one or more alternative QoS requirements that can be guaranteed or is currently applied.

Optionally, the method may further include: performing a mapping between a QoS reference used at the AF and a QoS reference used at the PCF.

Optionally, the operation of mapping may include: mapping a QoS reference associated with the one alternative QoS requirement that can be guaranteed or is currently applied, as indicated in the first QoS notification, to a QoS reference associated with the one alternative QoS requirement that can be guaranteed or is currently applied in the second QoS notification.

Optionally, the request may contain an indication that a QoS notification feature is supported at the AF.

Optionally, the QoS notification feature may be an AlternativeQoS_5G feature.

Optionally, the operations of subscribing and transmitting may be performed in response to determining that the request contains the indication.

According to a second aspect of the present disclosure, a network node is provided. The network node includes a processor and a memory. The memory stores instructions enabling the network node to implement an NEF. The network node is configured to, when implementing the NEF, perform the method according to the above first aspect.

According to a third aspect of the present disclosure, a computer-readable storage medium is provided. The computer-readable storage medium has computer-readable instructions embodied therein. When the computer-readable instructions are executed by a processor of a network node, the computer-readable instructions configure the network node to perform the method according to the above first aspect.

According to a fourth aspect of the present disclosure, a method in an AF is provided. The method includes: transmitting, to an NEF, a request to create a session with a requested QoS, wherein the request contains one or more alternative QoS requirements. The method further includes: receiving, from the NEF, a QoS notification indicating that the requested QoS is not guaranteed or the requested QoS is guaranteed, wherein the QoS notification, when indicating that the requested QoS is not guaranteed, further indicates one of the one or more alternative QoS requirements that can be guaranteed or is currently applied.

Optionally, the method may further include: applying a rate adaptation to the session based on the QoS notification.

Optionally, the method may further include: updating the requested QoS based on the QoS notification.

Optionally, the method may further include: applying a rate adaptation to the session based on the one alternative QoS requirement that can be guaranteed or is currently applied.

Optionally, the method may further include: updating the requested QoS based on the one alternative QoS requirement that can be guaranteed or is currently applied.

Optionally, the request may contain an indication that a QoS notification feature is supported at the AF.

Optionally, the QoS notification feature may be an AlternativeQoS_5G feature.

With the embodiments of the present disclosure, upon receiving a request to create a session with a requested QoS from an AF, an NEF can subscribe to a first QoS notification from a PCF, the first QoS notification indicating that the requested QoS is not guaranteed or the requested QoS is guaranteed. In response to receiving the first QoS notification from the PCF, the NEF can transmit a second QoS notification indicating that the requested QoS is not guaranteed or the requested QoS is guaranteed to the AF. In this way, the NEF can notify the AF that the requested QoS is not guaranteed or the requested QoS is guaranteed. Accordingly, the AF may apply a rate adaptation or update the requested QoS based on the notification.

### BRIEF DESCRIPTION OF THE DRAWINGS

The above and other objects, features and advantages will be more apparent from the following description with reference to the figures, in which:
- Fig. 1: is sequence diagram showing a procedure for setting up an AF session with a requested QoS;
- Fig. 2: is a flowchart illustrating a method in an NEF according to an embodiment of the present disclosure;
- Fig. 3: is a flowchart illustrating a method in an AF according to another embodiment of the present disclosure;
- Fig. 4: is a block diagram of an example network node for implementing an NEF;
- Fig. 5: is a block diagram of a network node for implementing an NEF according to another example;
- Fig. 6: is a block diagram of an example network node for implementing an AF; and
- Fig. 7: is a block diagram of another example network node for implementing an AF.

### DETAILED DESCRIPTION

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of examples. As used herein, the term "and/or" includes any and all combinations of one or more of the associated listed terms.

As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

In the following description and claims, unless defined otherwise, all technical and scientific terms used herein have the same meaning as commonly understood by one of ordinary skills in the art.

The term "terminal device" or "UE" encompasses a device which is able to communicate with a network node, such as a base station, or with another wireless device by transmitting and/or receiving wireless signals. Thus, the term "terminal device" or "UE" encompasses, but is not limited to: a mobile phone, a stationary or mobile wireless device for machine-to-machine communication, an integrated or embedded wireless card, an externally plugged in wireless card, etc.

A "network node" or a "network function" can be implemented in a physical node or a virtualized environment, e.g., a cloud environment.

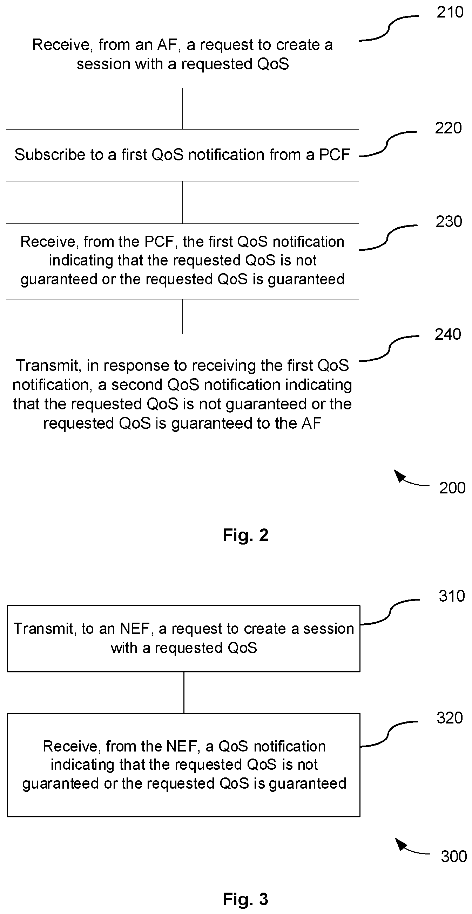

Fig. 2 is a flowchart illustrating a method 200 in an NEF according to an embodiment of the present disclosure.

At block 210, the NEF receives from an AF a request to create a session with a requested QoS. For example, the request may be a Nnef_AFsessionWithQoS_ Create request as described above in connection with step 1.1 in Fig. 1. In an example, the request may contain one or more alternative QoS requirements, as described above in connection with step 1.1 in Fig. 1.

At block 220, the NEF subscribes to a first QoS notification from a PCF. The first QoS notification indicates that the requested QoS is not guaranteed (e.g., changed from being guaranteed to not being guaranteed) or the requested QoS is guaranteed (e.g., changed from not being guaranteed to being guaranteed). This subscription may use a Npcf_PolicyAuthorization_Subscribe message as described in step 1.6 in Fig. 1. The first QoS notification may use e.g., a QOS_NOTIF event as specified in Section 5.6.3.9 of TS 29.514, which has two values "GUARANTEED" and "NOT_GUARANTEED" as defined in Table 5.6.3.9-1 of TS 29.514, as reproduced as Table 1 below:

**Table 1: Enumeration QosNotifType**

| **Enumeration value** | **Description** | **Applicability** |
|---|---|---|
| GUARANTEED | The QoS targets of one or more SDFs are guaranteed again. | |
| NOT_GUARANTEED | The QoS targets of one or more SDFs are not being guaranteed. | |

The request received in the block 210 contains one or more alternative QoS requirements. In this case, the first QoS notification, when indicating that the requested QoS is not guaranteed, further indicates one of the one or more alternative QoS requirements that can be guaranteed or is currently applied. For example, the first QoS notification may use a data type "QosNotificationControllnfo" as specified in Section 5.6.2.15 of TS 29.514.

At block 230, the first QoS notification is received from the PCF (e.g., in a Npcf_PolicyAuthorization_Notify message as described in step 1.7 in Fig. 1).

At block 240, in response to receiving the first QoS notification, the NEF transmits a second QoS notification indicating that the requested QoS is not guaranteed or the requested QoS is guaranteed to the AF.

Here, in an example, for the second QoS notification, a data type "UserPlaneNotificationData" and a data type "UserPlaneEventReport" can be defined, as shown in Table 2 and Table 3 below:

**Table 2: Definition of the UserPlaneNotificationData data type**

| **Attribute name** | **Data type** | **Cardinality** | **Description** |
|---|---|---|---|
| eventReports | array(UserPlaneEvent Report) | 1..N | Contains the reported event and applicable information |

**Table 3: Definition of the UserPlaneEventReport data type**

| **Attribute name** | **Data type** | **Cardinality** | **Description** |
|---|---|---|---|
| event | UserPlaneEvent | 1 | Indicates the event reported bv the SCEF. |
| appliedQosRef | string | 0..1 | The currently applied QoS reference. |
| | | | Applicable for event |
| | | | QOS_NOT_GUARANTEED. |

The "UserPlaneEvent" in Table 3 may have at least two values, "QOS_GUARANTEED" or "QOS_NOT_GUARANTEED", as defined in Table 4 below:

**Table 4: Enumeration UserPlaneEvent**

| **Enumeration value** | **Description** | **Applicability** |
|---|---|---|
| QOS_GUARANTEED | The QoS targets of one or more SDFs are guaranteed again. | AlternativeQoS_5G |
| QOS_NOT_GUARANTEED | The QoS targets of one or more SDFs are not being guaranteed. | AlternativeQoS_5G |

When the first QoS notification indicates the one alternative QoS requirement that can be guaranteed or is currently applied, the second QoS notification also indicates the one alternative QoS requirement that can be guaranteed or is currently applied, e.g., referring to "appliedQosRef" in Table 3.

The second QoS notification transmitted in the block 230 can use a Nnef_AFsessionWithQoS_ Notify message, as described in step 1.8 in Fig. 1, which can be enhanced to carry the UserPlaneEvent (e.g., "QOS_GUARANTEED" or "QOS_NOT_GUARANTEED"), and optionally "appliedQosRef" in case of "QOS_NOT_ GUARANTEED".

In an example, QoS references used at the AF may be the same as or different from those used at the PCF. In the latter case, the NEF can perform mapping operations between the QoS references used at the AF and the QoS references used at the PCF. For example, the NEF can map a QoS reference associated with the one alternative QoS requirement that can be guaranteed or is currently applied, as indicated in the first QoS notification, to a QoS reference associated with the one alternative QoS requirement that can be guaranteed or is currently applied in the second QoS notification.

In an example, the request received in the block 210 may contain an indication that a QoS notification feature is supported at the AF. The operations of subscribing in the block 220 and transmitting in the block 240 may be performed in response to determining that the request contains the indication. For example, the feature can be e.g., "AlternativeQoS_5G" as shown in Table 4, indicating the support of alternative QoS requirements and/or QoS notification (i.e., "QOS_GUARANTEED" or "QOS_NOT_GUARANTEED").

Fig. 3 is a flowchart illustrating a method 300 in an AF according to an embodiment of the present disclosure.

At block 310, the AF transmits, to an NEF, a request to create a session with a requested QoS. The request here corresponds to the request as described above in connection with the block 210 in Fig. 1, and details thereof will thus be omitted here.

At block 320, the AF receives, from the NEF, a QoS notification indicating that the requested QoS is not guaranteed (e.g., changed from being guaranteed to not being guaranteed) or the requested QoS is guaranteed (e.g., changed from not being guaranteed to being guaranteed). The QoS notification here corresponds to the second QoS notification as described above in connection with the block 240 in Fig. 1, and details thereof will thus be omitted here.

In an example, the AF can apply a rate adaptation to the session based on the QoS notification. Alternatively, the AF can update the requested QoS based on the QoS notification. For example, the requested QoS may be a bandwidth of 50Mbps (Million bits per second) for a video streaming service. When the QoS notification indicates that the requested QoS is not guaranteed, the AF can apply a rate adaptation at an application level, e.g., to reduce a resolution or frame rate for the video streaming service (e.g., from 4K to 720p), or can reduce the requested QoS (e.g., to a bandwidth of 30Mbps) by updating the QoS reference associated with the requested QoS using Hyper Text Transfer Protocol (HTTP) PUT or PATCH as specified in Section 4.4.13 of TS 29.122, V16.4.0.

The request transmitted in the block 310 contains one or more alternative QoS requirements. The QoS notification, when indicating that the requested QoS is not guaranteed, further indicates one of the one or more alternative QoS requirements that can be guaranteed or is currently applied. In this case, the AF may apply a rate adaptation to the session or update the requested QoS based on the one alternative QoS requirement that can be guaranteed or is currently applied. For example, the requested QoS may be a bandwidth of 50Mbps for a video streaming service. When the QoS notification indicates that the requested QoS is not guaranteed and a bandwidth of 30MHz can be guaranteed or currently applied, the AF can apply a rate adaptation at an application level based on the bandwidth of 30Mbps, e.g., to reduce a resolution or frame rate for the video streaming service (e.g., from 4K to 720p), or can reduce the requested QoS (e.g., to a bandwidth of 30Mbps) by updating the QoS reference associated with the requested QoS using Hyper Text Transfer Protocol (HTTP) PUT or PATCH as specified in Section 4.4.13 of TS 29.122.

In an example, the request transmitted in the block 310 may contain an indication that a QoS notification feature is supported at the AF. As described above, the feature can be e.g., "AlternativeQoS_5G" as shown in Table 4, indicating the support of alternative QoS requirements and/or QoS notification (i.e., "QOS_GUARANTEED" or "QOS_NOT_GUARANTEED").

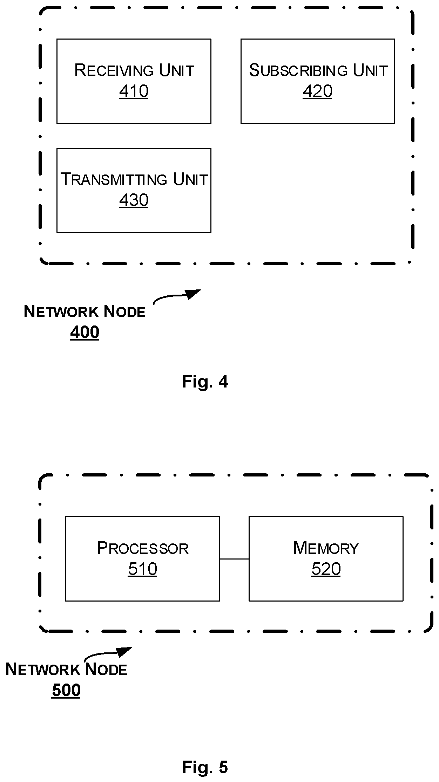

Correspondingly to the method 200 as described above, a network node is provided. Fig. 4 is a block diagram of an example network node 400 for implementing an NEF.

The network node 400 can be operative to, when implementing an NEF, perform the method 200 as shown in Fig. 2. As shown in Fig. 4, the network node 400 includes a receiving unit 410 configured to receive, from an AF, a request to create a session with a requested QoS. The network node 400 further includes a subscribing unit 420 configured to subscribe to a first QoS notification from a PCF. The receiving unit 410 is further configured to receive, from the PCF, the first QoS notification indicating that the requested QoS is not guaranteed or the requested QoS is guaranteed. The network node 400 further includes a transmitting unit 430 configured to transmit, in response to receiving the first QoS notification, a second QoS notification indicating that the requested QoS is not guaranteed or the requested QoS is guaranteed to the AF.

Optionally, the request may contain one or more alternative QoS requirements.

Optionally, each of the first QoS notification and the second QoS notification, when indicating that the requested QoS is not guaranteed, may further indicate one of the one or more alternative QoS requirements that can be guaranteed or is currently applied.

Optionally, the network node 400 may further include a mapping unit configured to perform a mapping between a QoS reference used at the AF and a QoS reference used at the PCF.

Optionally, the operation of mapping may include: mapping a QoS reference associated with the one alternative QoS requirement that can be guaranteed or is currently applied, as indicated in the first QoS notification, to a QoS reference associated with the one alternative QoS requirement that can be guaranteed or is currently applied in the second QoS notification.

Optionally, the request may contain an indication that a QoS notification feature is supported at the AF.

Optionally, the QoS notification feature may be an AlternativeQoS_5G feature.

Optionally, the operation performed by the subscribing unit 420 and the operation performed by the transmitting unit 430 may be performed in response to determining that the request contains the indication.

The units 410, 420, and 430 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 2.

Fig. 5 is a block diagram of a network node 500 for implementing an NEF according to another example.

The network node 500 includes a processor 510 and a memory 520. The memory 520 contains instructions executable by the processor 510 whereby the network node 500 is operative to, when implementing the NEF, perform the actions, e.g., of the procedure described earlier in conjunction with Fig. 2. Particularly, the memory 520 contains instructions executable by the processor 510 whereby the network node 500 is operative to, when implementing the NEF:
receive, from an AF, a request to create a session with a requested QoS;
subscribe to a first QoS notification from a PCF; receive, from the PCF, the first QoS notification indicating that the requested QoS is not guaranteed or the requested QoS is guaranteed; and transmit, in response to receiving the first QoS notification, a second QoS notification indicating that the requested QoS is not guaranteed or the requested QoS is guaranteed to the AF.

The request contains one or more alternative QoS requirements.

Each of the first QoS notification and the second QoS notification, when indicating that the requested QoS is not guaranteed, further indicates one of the one or more alternative QoS requirements that can be guaranteed or is currently applied.

Optionally, the memory 520 may further contain instructions executable by the processor 510 whereby the network node 500 is operative to, when implementing the NEF: perform a mapping between a QoS reference used at the AF and a QoS reference used at the PCF.

Optionally, the operation of mapping may include: mapping a QoS reference associated with the one alternative QoS requirement that can be guaranteed or is currently applied, as indicated in the first QoS notification, to a QoS reference associated with the one alternative QoS requirement that can be guaranteed or is currently applied in the second QoS notification.

Optionally, the request may contain an indication that a QoS notification feature is supported at the AF.

Optionally, the QoS notification feature may be an AlternativeQoS_5G feature.

Optionally, the operations of subscribing and transmitting may be performed in response to determining that the request contains the indication.

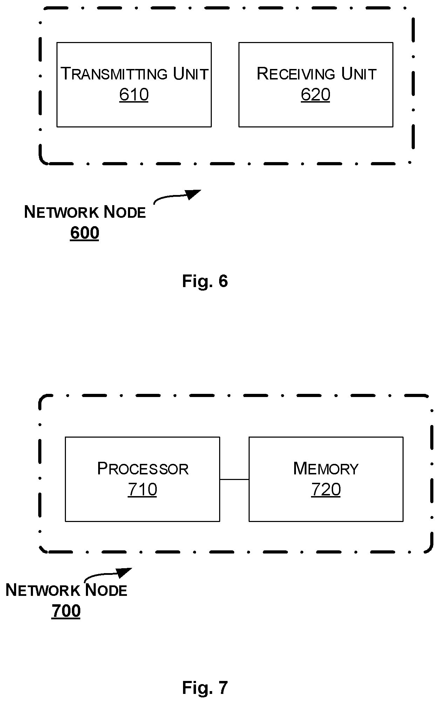

Correspondingly to the method 300 as described above, a network node is provided. Fig. 6 is a block diagram of a network node 600 for implementing an AF.

Optionally, the network node 600 can be operative to, when implementing an AF, perform the method 300 as shown in Fig. 3. As shown in Fig. 6, the network node 600 includes a transmitting unit 610 configured to transmit, to an NEF, a request to create a session with a requested QoS. The network node 600 further includes a receiving unit 620 configured to receive, from the NEF, a QoS notification indicating that the requested QoS is not guaranteed or the requested QoS is guaranteed.

Optionally, the network node 600 may further include a rate adaptation unit configured to apply a rate adaptation to the session based on the QoS notification.

Optionally, the network node 600 may further include an updating unit configured to update the requested QoS based on the QoS notification.

Optionally, the request may contain one or more alternative QoS requirements.

Optionally, the QoS notification, when indicating that the requested QoS is not guaranteed, may further indicate one of the one or more alternative QoS requirements that can be guaranteed or is currently applied.

Optionally, the network node 600 may further include a rate adaptation unit configured to apply a rate adaptation to the session based on the one alternative QoS requirement that can be guaranteed or is currently applied.

Optionally, the network node 600 may further include an updating unit configured to update the requested QoS based on the one alternative QoS requirement that can be guaranteed or is currently applied.

Optionally, the request may contain an indication that a QoS notification feature is supported at the AF.

Optionally, the QoS notification feature may be an AlternativeQoS_5G feature.

The units 610 and 620 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 3.

Fig. 7 is a block diagram of a network node 700 for implementing an AF according to another example.

The network node 700 includes a processor 710 and a memory 720. The memory 720 contains instructions executable by the processor 710 whereby the network node 700 is operative to, when implementing the AF, perform the actions, e.g., of the procedure described earlier in conjunction with Fig. 3. Particularly, the memory 720 contains instructions executable by the processor 710 whereby the network node 700 is operative to, when implementing the AF: transmit, to an NEF, a request to create a session with a requested QoS; and receive, from the NEF, a QoS notification indicating that the requested QoS is not guaranteed or the requested QoS is guaranteed.

Optionally, the memory 720 may further contain instructions executable by the processor 710 whereby the network node 700 is operative to, when implementing the AF: apply a rate adaptation to the session based on the QoS notification.

Optionally, the memory 720 may further contain instructions executable by the processor 710 whereby the network node 700 is operative to, when implementing the AF: update the requested QoS based on the QoS notification.

The request contains one or more alternative QoS requirements.

The QoS notification, when indicating that the requested QoS is not guaranteed, further indicates one of the one or more alternative QoS requirements that can be guaranteed or is currently applied.

Optionally, the memory 720 may further contain instructions executable by the processor 710 whereby the network node 700 is operative to, when implementing the AF: apply a rate adaptation to the session based on the one alternative QoS requirement that can be guaranteed or is currently applied.

Optionally, the memory 720 may further contain instructions executable by the processor 710 whereby the network node 700 is operative to, when implementing the AF: update the requested QoS based on the one alternative QoS requirement that can be guaranteed or is currently applied.

Optionally, the request may contain an indication that a QoS notification feature is supported at the AF.

Optionally, the QoS notification feature may be an AlternativeQoS_5G feature.

Optionally, at least one computer program product may be provided in the form of a non-volatile or volatile memory, e.g., a non-transitory computer readable storage medium, an Electrically Erasable Programmable Read-Only Memory (EEPROM), a flash memory and a hard drive. The computer program product includes a computer program. The computer program includes: code/computer readable instructions, which when executed by the processor 510 causes the network node 500 to perform the actions, e.g., of the procedure described earlier in conjunction with Fig. 2, or code/computer readable instructions, which when executed by the processor 710 causes the network node 700 to perform the actions, e.g., of the procedure described earlier in conjunction with Fig. 3.

The computer program product may be configured as a computer program code structured in computer program modules. The computer program modules could essentially perform the actions of the flow illustrated in Fig. 2 or 3.

The processor may be a single CPU (Central Processing Unit), but could also comprise two or more processing units. For example, the processor may include general purpose microprocessors; instruction set processors and/or related chips sets and/or special purpose microprocessors such as Application Specific Integrated Circuits (ASICs). The processor may also comprise board memory for caching purposes. The computer program may be carried by a computer program product connected to the processor. The computer program product may comprise a non-transitory computer readable storage medium on which the computer program is stored. For example, the computer program product may be a flash memory, a Random Access Memory (RAM), a Read-Only Memory (ROM), or an EEPROM, and the computer program modules described above could in alternative embodiments be distributed on different computer program products in the form of memories.

## Claims

1. A method (200) in a Network Exposure Function, NEF, comprising:
receiving (210), from an Application Function, AF, a request to create a session with a requested Quality of Service, QoS, wherein the request contains one or more alternative QoS requirements;
subscribing (220) to a first QoS notification from a Policy Control Function, PCF;
receiving (230), from the PCF, the first QoS notification indicating that the requested QoS is not guaranteed or the requested QoS is guaranteed; and
transmitting (240), in response to receiving the first QoS notification, a second QoS notification indicating that the requested QoS is not guaranteed or the requested QoS is guaranteed to the AF, wherein each of the first QoS notification and the second QoS notification, when indicating that the requested QoS is not guaranteed, further indicates one of the one or more alternative QoS requirements that can be guaranteed or is currently applied.

2. The method (200) of claim 1, further comprising:
performing a mapping between a QoS reference used at the AF and a QoS reference used at the PCF, wherein the mapping is performed by the NEF, and wherein the QoS reference identifies a QoS requirement that is either requested by the AF or corresponds to an alternate QoS requirement at the PCF.

3. The method (200) of claim 2, wherein said mapping comprises: mapping a QoS reference associated with the one alternative QoS requirement that can be guaranteed or is currently applied, as indicated in the first QoS notification, to a QoS reference associated with the one alternative QoS requirement that can be guaranteed or is currently applied in the second QoS notification.

4. The method (200) of any of claims 1-3, wherein the request contains an indication that a QoS notification feature is supported at the AF; and wherein the QoS notification feature is an AlternativeQoS_5G feature.

5. The method (200) of claim 4, wherein said subscribing (220) and said transmitting (240) are performed in response to determining that the request contains the indication.

6. A network node (500) comprising a processor (510) and a memory (520), the memory (520) comprising instructions enabling the network node (500) to implement a Network Exposure Function, NEF, the network node being configured to, when implementing the NEF, perform the method according to any of claims 1-5.

7. A computer-readable storage medium having computer-readable instructions embodied therein, wherein when the computer-readable instructions are executed by a processor of a network node, the computer-readable instructions configure the network node to perform the method according to any of claims 1-6.

8. A method (300) in an Application Function, AF, comprising:
transmitting (310), to a Network Exposure Function, NEF, a request to create a session with a requested Quality of Service, QoS, wherein the request contains one or more alternative QoS requirements; and
receiving (320), from the NEF, a QoS notification indicating that the requested QoS is not guaranteed or the requested QoS is guaranteed, wherein the QoS notification, when indicating that the requested QoS is not guaranteed, further indicates one of the one or more alternative QoS requirements that can be guaranteed or is currently applied.

9. The method (300) of claim 8, further comprising:
applying a rate adaptation to the session based on the QoS notification; and/or updating the requested QoS based on the QoS notification;.

10. The method (300) of claim 8 or 9, further comprising:
applying a rate adaptation to the session based on the one alternative QoS requirement that can be guaranteed or is currently applied; and/or updating the requested QoS based on the one alternative QoS requirement that can be guaranteed or is currently applied.

11. The method (300) of any of claims 8-10, wherein the request contains an indication that a QoS notification feature is supported at the AF; and wherein the QoS notification feature is an AlternativeQoS_5G feature.

12. A network node (700) comprising a processor (710) and a memory (720), the memory (720) comprising enabling the network node (700) to implement an Application Function, AF, the network node being configured to, when implementing the AF, perform the method according to any of claims 8-11.

## Patentansprüche

1. Verfahren (200) in einer Network Exposure Function, NEF, umfassend:
Empfangen (210) einer Anforderung von einer Anwendungsfunktion, AF, zur Erstellung einer Sitzung mit einer angeforderten Dienstqualität, QoS, wobei die Anforderung eine oder mehrere alternative QoS-Anforderungen enthält;
Abonnieren (220) einer ersten QoS-Benachrichtigung von einer Policy Control Function, PCF;
Empfangen (230) der ersten QoS-Benachrichtigung von der PCF, die anzeigt, dass die angeforderte QoS nicht garantiert ist oder die angeforderte QoS garantiert ist; und
Übertragen (240) einer zweiten QoS-Benachrichtigung als Reaktion auf den Empfang der ersten QoS-Benachrichtigung, die anzeigt, dass die angeforderte QoS nicht garantiert ist oder die angeforderte QoS garantiert ist, an die AF, wobei jede der ersten QoS-Benachrichtigung und der zweiten QoS-Benachrichtigung, wenn sie anzeigt, dass die angeforderte QoS nicht garantiert ist, ferner eine der einen oder mehreren alternativen QoS-Anforderungen anzeigt, die garantiert werden kann oder derzeit angewendet wird.

2. Verfahren (200) nach Anspruch 1, ferner umfassend:
Durchführen einer Zuordnung zwischen einer QoS-Referenz, die an der AF verwendet wird, und einer QoS-Referenz, die an der PCF verwendet wird, wobei die Zuordnung durch die NEF durchgeführt wird, und wobei die QoS-Referenz eine QoS-Anforderung identifiziert, die entweder von der AF angefordert wird oder einer alternativen QoS-Anforderung an der PCF entspricht.

3. Verfahren (200) nach Anspruch 2, wobei das Zuordnen umfasst: Zuordnen einer QoS-Referenz, die mit der einen alternativen QoS-Anforderung verbunden ist, die garantiert werden kann oder derzeit angewendet wird, wie in der ersten QoS-Benachrichtigung angegeben, zu einer QoS-Referenz, die mit der einen alternativen QoS-Anforderung verbunden ist, die in der zweiten QoS-Benachrichtigung garantiert werden kann oder derzeit angewendet wird.

4. Verfahren (200) nach einem der Ansprüche 1 bis 3, wobei die Anforderung einen Hinweis enthält, dass eine QoS-Benachrichtigungsfunktion an der AF unterstützt wird; und wobei die QoS-Benachrichtigungsfunktion eine AlternativeQoS_5G-Funktion ist.

5. Verfahren (200) nach Anspruch 4, wobei das Abonnieren (220) und das Übertragen (240) als Reaktion auf das Bestimmen durchgeführt werden, dass die Anforderung den Hinweis enthält.

6. Netzwerkknoten (500), umfassend einen Prozessor (510) und einen Speicher (520), wobei der Speicher (520) Anweisungen umfasst, die den Netzwerkknoten (500) befähigen, eine Network Exposure Function, NEF, umzusetzen, wobei der Netzwerkknoten beim Umsetzen der NEF dazu konfiguriert ist, das Verfahren nach einem der Ansprüche 1 bis 5 durchzuführen.

7. Computerlesbares Speichermedium, auf dem computerlesbare Anweisungen verkörpert sind, wobei die computerlesbaren Anweisungen, wenn sie durch einen Prozessor eines Netzwerkknotens ausgeführt werden, den Netzwerkknoten dazu konfigurieren, das Verfahren nach einem der Ansprüche 1 bis 6 durchzuführen.

8. Verfahren (300) in einer Application Function, AF, umfassend:
Übertragen (310) einer Anforderung an eine Network Exposure Function, NEF, zur Erstellung einer Sitzung mit einer angeforderten Dienstqualität, QoS, wobei die Anforderung eine oder mehrere alternative QoS-Anforderungen enthält; und
Empfangen (320) einer QoS-Benachrichtigung von der NEF, die anzeigt, dass die angeforderte QoS nicht garantiert ist oder die angeforderte QoS garantiert ist, wobei die QoS-Benachrichtigung, wenn sie anzeigt, dass die angeforderte QoS nicht garantiert ist, ferner eine der einen oder mehreren alternativen QoS-Anforderungen anzeigt, die garantiert werden kann oder derzeit angewendet wird.

9. Verfahren (300) nach Anspruch 8, ferner umfassend:
Anwenden einer Ratenanpassung auf die Sitzung basierend auf der QoS-Benachrichtigung; und/oder Aktualisieren der angeforderten QoS basierend auf der QoS-Benachrichtigung.

10. Verfahren (300) nach Anspruch 8 oder 9, ferner umfassend:
Anwenden einer Ratenanpassung auf die Sitzung basierend auf der einen alternativen QoS-Anforderung, die garantiert werden kann oder derzeit angewendet wird; und/oder Aktualisieren der angeforderten QoS basierend auf der einen alternativen QoS-Anforderung, die garantiert werden kann oder derzeit angewendet wird.

11. Verfahren (300) nach einem der Ansprüche 8 bis 10, wobei die Anforderung einen Hinweis enthält, dass eine QoS-Benachrichtigungsfunktion an der AF unterstützt wird; und wobei die QoS-Benachrichtigungsfunktion eine AlternativeQoS_5G-Funktion ist.

12. Netzwerkknoten (700), der einen Prozessor (710) und einen Speicher (720) umfasst, wobei der Speicher (720) umfasst, den Netzwerkknoten (700) zu befähigen, eine Application Function, AF, zu implementieren, wobei der Netzwerkknoten dazu konfiguriert ist, bei der Implementierung der AF das Verfahren nach einem der Ansprüche 8 bis 11 durchzuführen.

## Revendications

1. Procédé (200) dans une fonction d'exposition de réseau, NEF, comprenant :
la réception (210), en provenance d'une fonction d'application, AF, d'une demande de création d'une session avec une qualité de service, QoS, demandée, dans lequel la demande contient une ou plusieurs exigences de QoS alternatives ;
la souscription (220) à une première notification de QoS provenant d'une fonction de contrôle de politique, PCF ;
la réception (230), en provenance de la PCF, de la première notification de QoS indiquant que la QoS demandée n'est pas garantie ou que la QoS demandée est garantie ; et
la transmission (240), en réponse à la réception de la première notification de QoS, d'une seconde notification de QoS indiquant que la QoS demandée n'est pas garantie ou que la QoS demandée est garantie à l'AF, dans lequel chacune de la première notification de QoS et de la seconde notification de QoS, lorsqu'elle indique que la QoS demandée n'est pas garantie, indique en outre l'une de l'une ou plusieurs exigences de QoS alternatives qui peut être garantie ou est actuellement appliquée.

2. Procédé (200) selon la revendication 1, comprenant en outre :
la réalisation d'une mise en correspondance entre une référence de QoS utilisée au niveau de l'AF et une référence de QoS utilisée au niveau de la PCF, dans lequel la mise en correspondance est réalisé par la NEF, et dans lequel la référence de QoS identifie une exigence de QoS qui est soit demandée par l'AF soit correspond à une exigence de QoS alternative au niveau de la PCF.

3. Procédé (200) selon la revendication 2, dans lequel ladite mise en correspondance comprend : la mise en correspondance d'une référence de QoS associée à ladite une exigence de QoS alternative qui peut être garantie ou est actuellement appliquée, comme indiqué dans la première notification de QoS, à une référence de QoS associée à ladite une exigence de QoS alternative qui peut être garantie ou est actuellement appliquée dans la seconde notification de QoS.

4. Procédé (200) selon l'une quelconque des revendications 1 à 3, dans lequel la demande contient une indication qu'une fonctionnalité de notification de QoS est prise en charge au niveau de l'AF ; et dans lequel la fonctionnalité de notification de QoS est une fonctionnalité AlternativeQoS_5G.

5. Procédé (200) selon la revendication 4, dans lequel ladite souscription (220) et ladite transmission (240) sont réalisées en réponse à la détermination que la demande contient l'indication.

6. Nœud de réseau (500) comprenant un processeur (510) et une mémoire (520), la mémoire (520) comprenant des instructions permettant au nœud de réseau (500) de mettre en œuvre une fonction d'exposition de réseau, NEF, le nœud de réseau étant configuré pour, lors de la mise en œuvre de la NEF, réaliser le procédé selon l'une quelconque des revendications 1 à 5.

7. Support de stockage lisible par ordinateur ayant des instructions lisibles par ordinateur incorporées dans celui-ci, dans lequel, lorsque les instructions lisibles par ordinateur sont exécutées par un processeur d'un nœud de réseau, les instructions lisibles par ordinateur configurent le nœud de réseau pour la réalisation du procédé selon l'une quelconque des revendications 1 à 6.

8. Procédé (300) dans une fonction d'application, AF, comprenant :
la transmission (310), à une fonction d'exposition de réseau, NEF, d'une demande de création d'une session avec une qualité de service, QoS, demandée, dans lequel la demande contient une ou plusieurs exigences de QoS alternatives ; et
la réception (320), en provenance de la NEF, d'une notification de QoS indiquant que la QoS demandée n'est pas garantie ou que la QoS demandée est garantie, dans lequel la notification de QoS, lorsqu'elle indique que la QoS demandée n'est pas garantie, indique en outre l'une de l'une ou plusieurs exigences de QoS alternatives qui peut être garantie ou est actuellement appliquée.

9. Procédé (300) selon la revendication 8, comprenant en outre :
l'application d'une adaptation de débit à la session sur la base de la notification de QoS ; et/ou la mise à jour de la QoS demandée sur la base de la notification de QoS ;

10. Procédé (300) selon la revendication 8 ou 9, comprenant en outre :
l'application d'une adaptation de débit à la session sur la base de ladite une exigence de QoS alternative qui peut être garantie ou est actuellement appliquée ; et/ou la mise à jour de la QoS demandée sur la base de ladite une exigence de QoS alternative qui peut être garantie ou est actuellement appliquée.

11. Procédé (300) selon l'une quelconque des revendications 8 à 10, dans lequel la demande contient une indication qu'une fonctionnalité de notification de QoS est prise en charge au niveau de l'AF ; et dans lequel la fonctionnalité de notification de QoS est une fonctionnalité AlternativeQoS_5G.

12. Nœud de réseau (700) comprenant un processeur (710) et une mémoire (720), la mémoire (720) permettant au nœud de réseau (700) de mettre en œuvre une fonction d'application, AF, le nœud de réseau étant configuré pour, lors de la mise en œuvre de l'AF, réaliser le procédé selon l'une quelconque des revendications 8 à 11.
